# EUROPEAN PATENT SPECIFICATION

(11) **EP 4 350 731 B1**
(45) Date of publication and mention of the grant of the patent: **02.04.2025**
(21) Application number: 24159077.7
(22) Date of filing: 25.02.2020
(51) Int. Cl.: H01H 3/44, H01H 31/00, H01H 31/32

(54) **A SWITCH FOR A MEDIUM VOLTAGE OR HIGH VOLTAGE SWITCHGEAR**
SCHALTER FÜR EINE MITTEL- ODER HOCHSPANNUNGSSCHALTANLAGE
COMMUTATEUR POUR APPAREILLAGE DE COMMUTATION MOYENNE TENSION OU HAUTE TENSION

(43) Date of publication of application: 10.04.2024
(62) Divisional of application: 20159339.9
(73) Proprietor: ABB SCHWEIZ AG, 5400 Baden (CH)
(72) Inventor: LISSEK, Karsten, 44627 Herne (DE); ZITZMANN, Robby, 40822 Mettmann (DE)
(74) Representative: Maiwald GmbH

(56) References cited:
- EP-A1- 1 659 601
- GB-A- 507 760
- US-A- 4 466 310

## Description

### FIELD OF THE INVENTION

The present invention relates to a switch that has utility as a two position switch (e.g. disconnector and earther) or three position switch (e.g. disconnector) in an air-insulated or gas-insulated switchgear for medium voltage or high voltage applications.

### BACKGROUND OF THE INVENTION

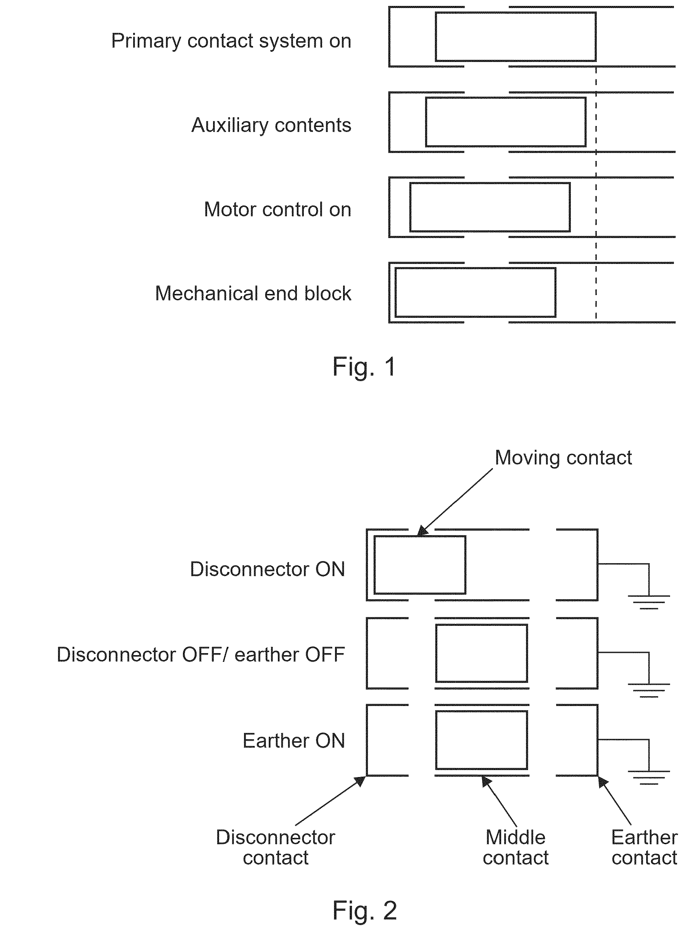

Contact systems for two or three position switches, such as disconnector and earth and disconnectors, for switchgear are actuated by different techniques, comprising for example levers, spindles, push rods, in order to move the switch into each of its end positions. The task is to move the switch to a particular position and keep it in its position, whilst under load by nominal current and also during a situation when short circuit current flows. However, direct driven two and three position switches have to cover several requirements relating to the different switch positions relating to the position of a moveable contact. For example, the switch ON position is not one position only. It is more or less an area relating to several events that happen (primary contact system on, auxiliary contacts on, motor control on, mechanical end block on etc.). This leads to the requirement of an increased overlap in contact system area to ensure sufficient contact is made or it is necessary to provide a drive that very accurately positions the moveable contact with respect to the fixed contacts, which leads to increased production requirements and costs. This is shown schematically in Fig. 1 relating to a known disconnector switch.

There is a need to address these issues.

The document EP 1 659 601 A1 discloses a switch for a medium voltage or high voltage switch gear, according to the preamble of claim 1.

### SUMMARY OF THE INVENTION

Therefore, it would be advantageous to have an improved two or three position switch for a medium voltage or high voltage switchgear.

The object of the present invention is solved with the subject matter of the independent claims, wherein further embodiments are incorporated in the dependent claims.

In a first aspect, there is provided a switch for a medium voltage or high voltage switchgear, wherein the switch comprises:
- a first fixed contact;
- a second fixed contact;
- a moveable contact;
- a first gear wheel; and
- a second gear wheel.

In an on state of the switch the moveable contact is in a position that connects the first fixed contact to the second fixed contact. In an off state of the switch the moveable contact is in a position where the first fixed contact is not connected to the second fixed contact. Rotation of the first gear wheel is configured to move the moveable contact. Rotation of the second gear wheel is configured to intermittently rotate the first gear wheel.

In this way, a two or three switch is provided where the static positions of the moveable contact can be more precisely controlled because further rotation of the drive gear that moves the moveable contact provides an intermittent movement such that when the moveable contact is in the correct position a further rotation of the drive gear does not lead to movement of the moveable contact. In this manner, the drive gear control does not have to be as precise as previously required and the whole switch assembly can be smaller, because the moveable contact does not need to overlap fixed contacts as much - where previously that overlap was required in order that a switch position was maintained even if the moveable contact was not absolutely in the correct position.

In an example, rotation of the second gear wheel in a first rotational direction over a first part of one revolution is configured to rotate the first gear wheel in a first rotational direction. A continuation of rotation of the second gear wheel in the first rotational direction past the first part of the revolution for a further second part of the revolution is configured not to rotate the first gear wheel.

In an example, a continuation of rotation of the second gear wheel in the first rotational direction past the further second part of the revolution is configured to rotate the first gear wheel.

In an example, the first rotational direction of the second gear wheel is in the opposite rotational direction to the first rotational direction of the first gear wheel.

In an example, rotation of the second gear wheel in a second rotational direction opposite to the first rotational direction of the second gear wheel over the first part of one revolution is configured to rotate the first gear wheel in a second rotational direction opposite to the first rotational direction of the first gear wheel. A continuation of rotation of the second gear wheel in the second rotational direction past the first part of the revolution for a further second part of the revolution is configured not to rotate the first gear wheel.

In an example, a continuation of rotation of the second gear wheel in the second rotational direction past the further second part of the revolution is configured to rotate the first gear wheel.

In an example, the second rotational direction of the second gear wheel is in the opposite rotational direction to the second rotational direction of the first gear wheel.

According to the invention, the second gear wheel comprises a first plate and wherein a first part of a circumference of the first plate of the second gear wheel comprises teeth that are configured to engage with teeth of a first plate of the first gear wheel. The rotation of the second gear wheel is configured to rotate the first gear wheel when the teeth of the second gear wheel are engaged with the teeth of the first gear wheel.

According to the invention, the second gear wheel comprises a second plate that is configured to rotate with rotation of the first plate of the second gear wheel. The first gear wheel comprises a second plate that is configured to rotate with rotation of the first plate of the first gear wheel. The second plate of the second gear wheel comprises at least one drive bolt configured to engage with at least one slot in the second plate of the first gear wheel. The rotation of the second gear wheel is configured to rotate the first gear wheel when a drive bolt of the at least one drive bolt of the second gear wheel is engaged with a slot of the at least one slot of the first gear wheel.

Thus, the driver bolt starts the motion of the output gear (the first gear wheel) by driving in a slot. The driver bolts can run into the slots tangentially, to produce a shock-free and smooth motion. After the acceleration with the driver bolts is completed, the motion is transferred to teeth of the gears. A second driver bolt stops the moving by driving in a second slot that gradually brings the rotational movement of the first gear wheel to a stop, even though the driver gear (the second gear wheel) has been continuously rotating.

According to the invention, the teeth of the first plate of the second gear wheel extend from a first tooth at the beginning of the part of the circumference of the first plate to a last tooth at the end of the part of the circumference of the first plate. A first drive bolt of the at least one drive bolt is located adjacent to the first tooth on an opposite side to the first tooth to the other teeth and wherein a second drive bolt of the at least one drive bolt is located adjacent to the last tooth on an opposite side to the last tooth to the other teeth. In an example, the second plate of the first gear wheel is a starwheel.

In an example, a second part of the circumference of the first plate of the second gear wheel is configured not to engage with the teeth of the first plate of the first gear wheel. The rotation of the second gear wheel is configured not to rotate the first gear wheel when the second part of the circumference of the first plate of the second gear wheel is adjacent to the teeth of the first gear wheel.

In an example, the second part of the circumference of the first plate of the second gear wheel does not comprise any teeth.

In an example, the first part and second part of the circumference of the first plate of the second gear wheel forms a complete circumference of the first plate of the second gear wheel.

In an example, the switch comprises:
- a third fixed contact;
wherein, in an earthed state of the switch the moveable contact is in a position that connects the second fixed contact to the third fixed contact.

In a second aspect, there is provided a medium voltage or high voltage switchgear, comprising at least one switch according to the first aspect.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation an example of a known disconnector switch requiring large overlapping areas of the moveable contact with fixed contacts;
Fig. 2 shows a schematic representation an example of a new switch;
Fig. 3 shows a schematic representation of an example of a new switch in an on position showing movement of the first and second gear wheels for moving the moveable contact;
Fig. 4 shows a schematic representation of an example of a new switch in an earthing position showing movement of the first and second gear wheels for moving the moveable contact; and
Fig. 5 shows front and rear views of the first and second gear wheels.

### DETAILED DESCRIPTION OF EMBODIMENTS

Figs. 2-5 relate to a new switch for a medium voltage or high voltage switchgear. The described switch technology can be utilized in the form of a two position switch (e.g. disconnector and eartger) and for a three position switch (e.g. disconnector). According to an example, the switch comprises a first fixed contact, a second fixed contact, a moveable contact, a first gear wheel, and a second gear wheel. In an on state of the switch the moveable contact is in a position that connects the first fixed contact to the second fixed contact. In an off state of the switch the moveable contact is in a position where the first fixed contact is not connected to the second fixed contact. Rotation of the first gear wheel is configured to move the moveable contact. Rotation of the second gear wheel is configured to intermittently rotate the first gear wheel.

In an example, rotation of the second gear wheel in a first rotational direction over a first part of one revolution is configured to rotate the first gear wheel in a first rotational direction. A continuation of rotation of the second gear wheel in the first rotational direction past the first part of the revolution for a further second part of the revolution is configured not to rotate the first gear wheel.

In an example, a continuation of rotation of the second gear wheel in the first rotational direction past the further second part of the revolution is configured to rotate the first gear wheel.

In an example, the first rotational direction of the second gear wheel is in the opposite rotational direction to the first rotational direction of the first gear wheel.

In an example, rotation of the second gear wheel in a second rotational direction opposite to the first rotational direction of the second gear wheel over the first part of one revolution is configured to rotate the first gear wheel in a second rotational direction opposite to the first rotational direction of the first gear wheel. A continuation of rotation of the second gear wheel in the second rotational direction past the first part of the revolution for a further second part of the revolution is configured not to rotate the first gear wheel.

In an example, a continuation of rotation of the second gear wheel in the second rotational direction past the further second part of the revolution is configured to rotate the first gear wheel.

In an example, the second rotational direction of the second gear wheel is in the opposite rotational direction to the second rotational direction of the first gear wheel.

In an example, the second gear wheel comprises a first plate and wherein a first part of a circumference of the first plate of the second gear wheel comprises teeth that are configured to engage with teeth of a first plate of the first gear wheel. The rotation of the second gear wheel is configured to rotate the first gear wheel when the teeth of the second gear wheel are engaged with the teeth of the first gear wheel.

In an example, the second gear wheel comprises a second plate that is configured to rotate with rotation of the first plate of the second gear wheel. The first gear wheel comprises a second plate that is configured to rotate with rotation of the first plate of the first gear wheel. The second plate of the second gear wheel comprises at least one drive bolt configured to engage with at least one slot in the second plate of the first gear wheel. The rotation of the second gear wheel is configured to rotate the first gear wheel when a drive bolt of the at least one drive bolt of the second gear wheel is engaged with a slot of the at least one slot of the first gear wheel.

In an example, the teeth of the first plate of the second gear wheel extend from a first tooth at the beginning of the part of the circumference of the first plate to a last tooth at the end of the part of the circumference of the first plate. A first drive bolt of the at least one drive bolt is located adjacent to the first tooth on an opposite side to the first tooth to the other teeth and wherein a second drive bolt of the at least one drive bolt is located adjacent to the last tooth on an opposite side to the last tooth to the other teeth.

In an example, the second plate of the first gear wheel is a starwheel.

In an example, a second part of the circumference of the first plate of the second gear wheel is configured not to engage with the teeth of the first plate of the first gear wheel. The rotation of the second gear wheel is configured not to rotate the first gear wheel when the second part of the circumference of the first plate of the second gear wheel is adjacent to the teeth of the first gear wheel.

In an example, the second part of the circumference of the first plate of the second gear wheel does not comprise any teeth.

In an example, the first part and second part of the circumference of the first plate of the second gear wheel forms a complete circumference of the first plate of the second gear wheel.

Thus, the switch as described in any example above finds utility in a medium voltage or high voltage switchgear.

Thus, relating to figures 2-5 a specific detailed embodiment is now described. The inventors realised that starwheels, previously used in the printing and textile industries, could be used in a completely new way within a two position or three position switch for a medium or high voltage switchgear enabling to move the system into its each end positions and to keep it into its position during been loaded by nominal current and short circuit current.

A starwheel is a gear mechanism that translates a continuous rotation movement into intermittent rotary motion. It based on a gear drive. The drive wheel, also termed a second gear wheel, is teeth-uncompleted. Additionally the drive wheel is equipped with two drivers or bolts. The output gear, also termed a first gear wheel, is based on a gearwheel. Furthermore it has star curves. The drivers (or driver bolts) start and end the motion of the output gear by driving into the star curves. The driver bolts run into the star curves tangentially, to produce a shock-free and smooth motion. After the acceleration with the driver is completed, the motion will transferred by the gears.

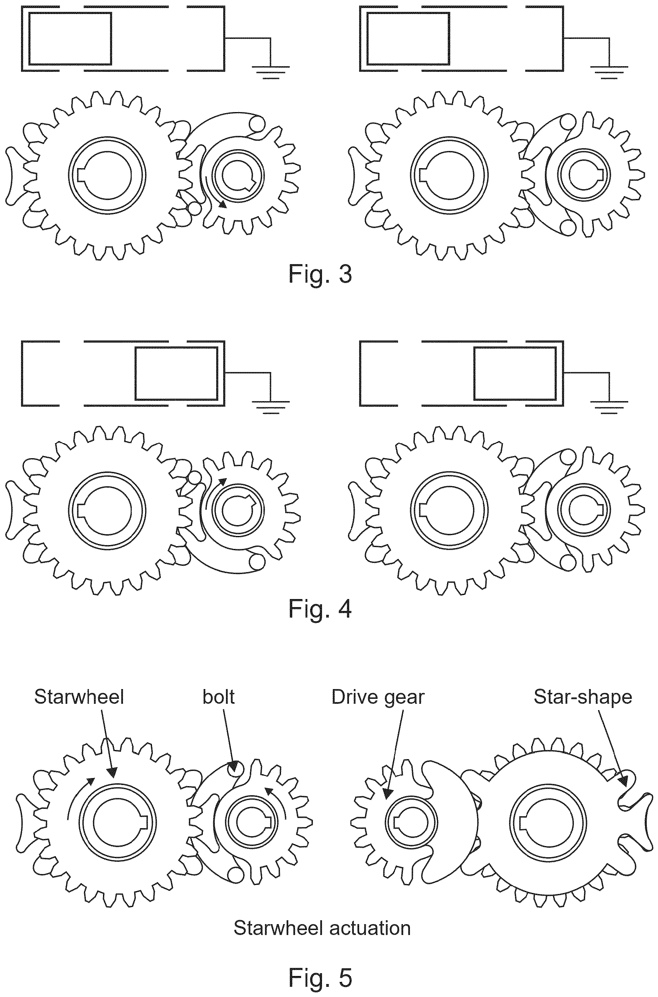

This is shown in figures 3 and 4. In figure 3, the second gear wheel has rotated and a driver bolt has engaged with a slot in the starwheel of the first gear wheel to gradually start to move it rotationally and then teeth of the second gear wheel engage with teeth of the first gear wheel to continue the movement. Then a second driver bolt has engaged with a second slot of te starwheel of the first gear wheel to gradually bring the second gear wheel to a stop, and all of this occurs for a continuous rotation of the second gear wheel. The moveable contact is associated with the first gear wheel, and has also moved slowly from a stationary then at moved a constant speed and has then been brought to rest at the switch/disconnector on position. Further rotational movement of the second gear wheel does not then lead to rotation of the first gear wheel or linear movement of the moveable contact, because the part of the second gear wheel that has no teeth is facing the first gear wheel and the second gear wheel does not engage with the first gear wheel.

Then the second gear wheel can rotate in the opposite direction to move the moveable contact to the switch/disconnector off position, where again from the on position the second gear wheel has rotated constantly and has led to an initial increased rotational speed of the first gear wheel as a driver bolt engages with a slot, then to a constant rotational speed as the teeth of the two gear wheel engage with one another, then as a second driver bolt of the second gear wheel engages with a slot of the starwheel of the first gear wheel the moveable contact is brought to a stop in the switch/disconnector off position. Initial further rotation of the second gear wheel does not lead to rotation of the first gear wheel or to movement of moveable contact until a driver bolt again engages with a slot of the starwheel of the first gear wheel, and the first gear wheel again starts to rotate and the moveable contact move, the first gear wheel then comes to a gradual stop and the moveable contact comes to a stop in the earth position as a second driver bolt leaves the slot in the starwheel of the first gear wheel, and again an initial further rotation of the second gear wheel does not rotate the first gear wheel or cause the moveable contact to move, because the toothless part of the second gear wheel is then facing the first gear wheel and it in effect freewheels.

The specific geometry of the two gear wheel is shown in further detail in figure 5.

Thus the new gear wheel system leads to a continuous actuation that will be transmitted into a discontinuous actuation. This leads to the situation that if the drive wheel (second gear wheel) continues to rotate to a certain extent after the moving the moveable contact to a specific switch position the contact system will not move further. This leads to situation where variations in tolerances in the drive has no influence on the contact system. This leads to the situation where in the drive area more space is available for all the contacts in a row providing a compact contact system. Another advantage is that the behaviour described before is connected with a positively driven contact system over the whole range.

## Claims

1. A switch for a medium voltage or high voltage switchgear, wherein the switch comprises:
- a first fixed contact;
- a second fixed contact;
- a moveable contact;
- a first gear wheel; and
- a second gear wheel;
wherein, in an on state of the switch the moveable contact is in a position that connects the first fixed contact to the second fixed contact;
wherein, in an off state of the switch the moveable contact is in a position where the first fixed contact is not connected to the second fixed contact;
wherein, rotation of the first gear wheel is configured to move the moveable contact;
wherein rotation of the second gear wheel is configured to intermittently rotate the first gear wheel;
**characterised in that** the second gear wheel comprises a first plate and wherein a first part of a circumference of the first plate of the second gear wheel comprises teeth that are configured to engage with teeth of a first plate of the first gear wheel, and wherein the rotation of the second gear wheel is configured to rotate the first gear wheel when the teeth of the second gear wheel are engaged with the teeth of the first gear wheel;
wherein the second gear wheel comprises a second plate that is configured to rotate with rotation of the first plate of the second gear wheel, wherein the first gear wheel comprises a second plate that is configured to rotate with rotation of the first plate of the first gear wheel, wherein the second plate of the second gear wheel comprises at least one drive bolt configured to engage with at least one slot in the second plate of the first gear wheel, and wherein the rotation of the second gear wheel is configured to rotate the first gear wheel when a drive bolt of the at least one drive bolt of the second gear wheel is engaged with a slot of the at least one slot of the first gear wheel; and
wherein the teeth of the first plate of the second gear wheel extends from a first tooth at the beginning of the part of the circumference of the first plate to a last tooth at the end of the part of the circumference of the first plate, and wherein a first drive bolt of the at least one drive bolt is located adjacent to the first tooth on an opposite side to the first tooth to the other teeth and wherein a second drive bolt of the at least one drive bolt is located adjacent to the last tooth on an opposite side to the last tooth to the other teeth.

2. Switch according to claim 1, wherein rotation of the second gear wheel in a first rotational direction over a first part of one revolution is configured to rotate the first gear wheel in a first rotational direction, and wherein a continuation of rotation of the second gear wheel in the first rotational direction past the first part of the revolution for a further second part of the revolution is configured not to rotate the first gear wheel.

3. Switch according to claim 2, wherein a continuation of rotation of the second gear wheel in the first rotational direction past the further second part of the revolution is configured to rotate the first gear wheel.

4. Switch according to any of claims 2-3, wherein the first rotational direction of the second gear wheel is in the opposite rotational direction to the first rotational direction of the first gear wheel.

5. Switch according to any of claims 2-4, wherein rotation of the second gear wheel in a second rotational direction opposite to the first rotational direction of the second gear wheel over the first part of one revolution is configured to rotate the first gear wheel in a second rotational direction opposite to the first rotational direction of the first gear wheel, and wherein a continuation of rotation of the second gear wheel in the second rotational direction past the first part of the revolution for a further second part of the revolution is configured not to rotate the first gear wheel.

6. Switch according to claim 5, wherein a continuation of rotation of the second gear wheel in the second rotational direction past the further second part of the revolution is configured to rotate the first gear wheel.

7. Switch according to any of claims 5-6, wherein the second rotational direction of the second gear wheel is in the opposite rotational direction to the second rotational direction of the first gear wheel.

8. Switch according to any of claims 1-7, wherein the second plate of the first gear wheel is a starwheel.

9. Switch according to any of claims 1-8, wherein a second part of the circumference of the first plate of the second gear wheel is configured not to engage with the teeth of the first plate of the first gear wheel, and wherein the rotation of the second gear wheel is configured not to rotate the first gear wheel when the second part of the circumference of the first plate of the second gear wheel is adjacent to the teeth of the first gear wheel.

10. Switch according to claim 9, wherein the second part of the circumference of the first plate of the second gear wheel does not comprise any teeth.

11. Switch according to any of claims 9-10, wherein the first part and second part of the circumference of the first plate of the second gear wheel forms a complete circumference of the first plate of the second gear wheel.

12. Switch according to any of claims 1-11, wherein the switch comprises:
- a third fixed contact;
wherein, in an earthed state of the switch the moveable contact is in a position that connects the second fixed contact to the third fixed contact.

13. A medium voltage or high voltage switchgear, comprising at least one switch according to any of claims 1-12.

## Patentansprüche

1. Schalter für eine Mittelspannungs- oder Hochspannungs-Schaltanlage, wobei
der Schalter Folgendes umfasst:
• einen ersten festen Kontakt,
• einen zweiten festen Kontakt,
• einen beweglichen Kontakt,
• ein erstes Zahnrad, und
• ein zweites Zahnrad,
wobei in einem Ein-Zustand des Schalters der bewegliche Kontakt in einer Stellung ist, die den ersten festen Kontakt mit dem zweiten festen Kontakt verbindet;
wobei in einem Aus-Zustand des Schalters der bewegliche Kontakt in einer Stellung ist, in der der erste feste Kontakt nicht mit dem zweiten festen Kontakt verbunden ist;
wobei die Drehung des ersten Zahnrads dazu eingerichtet ist, den beweglichen Kontakt zu bewegen;
wobei die Drehung des zweiten Zahnrads dazu eingerichtet ist, das erste Zahnrad intermittierend zu drehen; **dadurch gekennzeichnet, dass** das zweite Zahnrad eine erste Platte umfasst und wobei ein erster Teil eines Umfangs der ersten Platte des zweiten Zahnrads Zähne aufweist, die dazu eingerichtet sind, in Zähne einer ersten Platte des ersten Zahnrads einzugreifen, und wobei die Drehung des zweiten Zahnrads dazu eingerichtet ist, das erste Zahnrad zu drehen, wenn die Zähne des zweiten Zahnrads in die Zähne des ersten Zahnrads eingreifen;
wobei das zweite Zahnrad eine zweite Platte umfasst, die dafür eingerichtet ist, sich mit der Drehung der ersten Platte des zweiten Zahnrads zu drehen, wobei das erste Zahnrad eine zweite Platte umfasst, die dafür eingerichtet ist, sich mit der Drehung der ersten Platte des ersten Zahnrads zu drehen, wobei die zweite Platte des zweiten Zahnrads mindestens einen Mitnehmerbolzen aufweist, der dafür eingerichtet ist, in mindestens einen Schlitz in der zweiten Platte des ersten Zahnrads einzugreifen, und wobei die Drehung des zweiten Zahnrads dazu eingerichtet ist, das erste Zahnrad zu drehen, wenn ein Mitnehmerbolzen des mindestens einen Mitnehmerbolzens des zweiten Zahnrads in einen Schlitz des mindestens einen Schlitzes des ersten Zahnrads eingreift; und
wobei sich die Zähne der ersten Platte des zweiten Zahnrads von einem ersten Zahn am Anfang des Umfangsabschnitts der ersten Platte bis zu einem letzten Zahn am Ende dieses Umfangsabschnitts erstrecken und ein erster Mitnehmerbolzen des mindestens einen Mitnehmerbolzens benachbart zu dem ersten Zahn auf der dem ersten Zahn abgewandten Seite zu den übrigen Zähnen angeordnet ist sowie ein zweiter Mitnehmerbolzen des mindestens einen Mitnehmerbolzens benachbart zu dem letzten Zahn auf der dem letzten Zahn abgewandten Seite zu den übrigen Zähnen angeordnet ist.

2. Schalter nach Anspruch 1, bei dem die Drehung des zweiten Zahnrads in einer ersten Drehrichtung über einen ersten Teil einer Umdrehung dazu eingerichtet ist, das erste Zahnrad in einer ersten Drehrichtung zu drehen, und bei dem ein Fortsetzen der Drehung des zweiten Zahnrads in derselben ersten Drehrichtung über den ersten Teil der Umdrehung hinaus für einen weiteren zweiten Teil der Umdrehung dazu eingerichtet ist, das erste Zahnrad nicht zu drehen.

3. Schalter nach Anspruch 2, bei dem ein Fortsetzen der Drehung des zweiten Zahnrads in der ersten Drehrichtung über den weiteren zweiten Teil der Umdrehung hinaus dazu eingerichtet ist, das erste Zahnrad zu drehen.

4. Schalter nach einem der Ansprüche 2 bis 3, bei dem die erste Drehrichtung des zweiten Zahnrads der ersten Drehrichtung des ersten Zahnrads entgegengesetzt ist.

5. Schalter nach einem der Ansprüche 2 bis 4, bei dem die Drehung des zweiten Zahnrads in einer zweiten Drehrichtung, die der ersten Drehrichtung des zweiten Zahnrads entgegengesetzt ist, über einen ersten Teil einer Umdrehung dazu eingerichtet ist, das erste Zahnrad in einer zweiten Drehrichtung zu drehen, die der ersten Drehrichtung des ersten Zahnrads entgegengesetzt ist, und bei dem ein Fortsetzen der Drehung des zweiten Zahnrads in der zweiten Drehrichtung über den ersten Teil der Umdrehung hinaus für einen weiteren zweiten Teil der Umdrehung dazu eingerichtet ist, das erste Zahnrad nicht zu drehen.

6. Schalter nach Anspruch 5, bei dem ein Fortsetzen der Drehung des zweiten Zahnrads in der zweiten Drehrichtung über den weiteren zweiten Teil der Umdrehung hinaus dazu eingerichtet ist, das erste Zahnrad zu drehen.

7. Schalter nach einem der Ansprüche 5 bis 6, bei dem die zweite Drehrichtung des zweiten Zahnrads der zweiten Drehrichtung des ersten Zahnrads entgegengesetzt ist.

8. Schalter nach einem der Ansprüche 1 bis 7, bei dem die zweite Platte des ersten Zahnrads ein Sternrad ist.

9. Schalter nach einem der Ansprüche 1 bis 8, bei dem ein zweiter Teil des Umfangs der ersten Platte des zweiten Zahnrads dazu eingerichtet ist, nicht in die Zähne der ersten Platte des ersten Zahnrads einzugreifen, und bei dem die Drehung des zweiten Zahnrads dazu eingerichtet ist, das erste Zahnrad nicht zu drehen, wenn der zweite Teil des Umfangs der ersten Platte des zweiten Zahnrads den Zähnen des ersten Zahnrads gegenüberliegt.

10. Schalter nach Anspruch 9, bei dem der zweite Teil des Umfangs der ersten Platte des zweiten Zahnrads keine Zähne aufweist.

11. Schalter nach einem der Ansprüche 9 bis 10, bei dem der erste Teil und der zweite Teil des Umfangs der ersten Platte des zweiten Zahnrads zusammen den gesamten Umfang der ersten Platte des zweiten Zahnrads bilden.

12. Schalter nach einem der Ansprüche 1 bis 11, bei dem der Schalter ferner Folgendes umfasst:
• einen dritten festen Kontakt,
wobei sich in einem geerdeten Zustand des Schalters der bewegliche Kontakt in einer Stellung befindet, in der der zweite feste Kontakt mit dem dritten festen Kontakt verbunden ist.

13. Mittelspannungs- oder Hochspannungs-Schaltanlage, umfassend mindestens einen Schalter nach einem der Ansprüche 1 bis 12.

## Revendications

1. Commutateur pour un appareillage de commutation moyenne tension ou haute tension, dans lequel le commutateur comprend :
- un premier contact fixe ;
- un second contact fixe ;
- un contact mobile ;
- une première roue dentée ; et
- une seconde roue dentée ;
dans lequel, dans un état allumé du commutateur, le contact mobile est dans une position qui connecte le premier contact fixe au second contact fixe ;
dans lequel, dans un état éteint du commutateur, le contact mobile est dans une position où le premier contact fixe n'est pas connecté au second contact fixe ;
dans lequel la rotation de la première roue dentée est configurée pour déplacer le contact mobile ;
dans lequel la rotation de la seconde roue dentée est configurée pour faire tourner par intermittence la première roue dentée ;
**caractérisé en ce que** la seconde roue dentée comprend une première plaque et dans lequel une première partie d'une circonférence de la première plaque de la seconde roue dentée comprend des dents qui sont configurées pour venir en prise avec des dents d'une première plaque de la première roue dentée, et dans lequel la rotation de la seconde roue dentée est configurée pour faire tourner la première roue dentée lorsque les dents de la seconde roue dentée sont en prise avec les dents de la première roue dentée ;
dans lequel la seconde roue dentée comprend une seconde plaque qui est configurée pour tourner avec la rotation de la première plaque de la seconde roue dentée, dans lequel la première roue dentée comprend une seconde plaque qui est configurée pour tourner avec la rotation de la première plaque de la première roue dentée, dans lequel la seconde plaque de la seconde roue dentée comprend au moins un boulon d'entraînement configuré pour venir en prise avec au moins une fente dans la seconde plaque de la première roue dentée, et dans lequel la rotation de la seconde roue dentée est configurée pour faire tourner la première roue dentée lorsqu'un boulon d'entraînement de l'au moins un boulon d'entraînement de la seconde roue dentée est en prise avec une fente de l'au moins une fente de la première roue dentée ; et dans lequel les dents de la première plaque de la seconde roue dentée s'étendent d'une première dent au début de la partie de la circonférence de la première plaque à une dernière dent à l'extrémité de la partie de la circonférence de la première plaque, et dans lequel un premier boulon d'entraînement de l'au moins un boulon d'entraînement est situé à côté de la première dent sur un côté opposé à la première dent aux autres dents et dans lequel un second boulon d'entraînement de l'au moins un boulon d'entraînement est situé à côté de la dernière dent sur un côté opposé à la dernière dent aux autres dents.

2. Commutateur selon la revendication 1, dans lequel la rotation de la seconde roue dentée dans une première direction de rotation sur une première partie d'un tour est configurée pour faire tourner la première roue dentée dans une première direction de rotation, et dans lequel une continuation de la rotation de la seconde roue dentée dans la première direction de rotation au-delà de la première partie du tour pour une seconde partie supplémentaire du tour est configurée pour ne pas faire tourner la première roue dentée.

3. Commutateur selon la revendication 2, dans lequel une continuation de la rotation de la seconde roue dentée dans la première direction de rotation au-delà de la seconde partie supplémentaire du tour est configurée pour faire tourner la première roue dentée.

4. Commutateur selon l'une quelconque des revendications 2 à 3, dans lequel la première direction de rotation de la seconde roue dentée est dans la direction de rotation opposée à la première direction de rotation de la première roue dentée.

5. Commutateur selon l'une quelconque des revendications 2 à 4, dans lequel la rotation de la seconde roue dentée dans une seconde direction de rotation opposée à la première direction de rotation de la seconde roue dentée sur la première partie d'un tour est configurée pour faire tourner la première roue dentée dans une seconde direction de rotation opposée à la première direction de rotation de la première roue dentée, et dans lequel une continuation de la rotation de la seconde roue dentée dans la seconde direction de rotation au-delà de la première partie du tour pour une seconde partie supplémentaire du tour est configurée pour ne pas faire tourner la première roue dentée.

6. Commutateur selon la revendication 5, dans lequel une continuation de la rotation de la seconde roue dentée dans la seconde direction de rotation au-delà de la seconde partie supplémentaire du tour est configurée pour faire tourner la première roue dentée.

7. Commutateur selon l'une quelconque des revendications 5 à 6, dans lequel la seconde direction de rotation de la seconde roue dentée est dans la direction de rotation opposée à la seconde direction de rotation de la première roue dentée.

8. Commutateur selon l'une quelconque des revendications 1 à 7, dans lequel la seconde plaque de la première roue dentée est une roue en étoile.

9. Commutateur selon l'une quelconque des revendications 1 à 8, dans lequel une seconde partie de la circonférence de la première plaque de la seconde roue dentée est configurée pour ne pas venir en prise avec les dents de la première plaque de la première roue dentée, et dans lequel la rotation de la seconde roue dentée est configurée pour ne pas faire tourner la première roue dentée lorsque la seconde partie de la circonférence de la première plaque de la seconde roue dentée est à côté des dents de la première roue dentée.

10. Commutateur selon la revendication 9, dans lequel la seconde partie de la circonférence de la première plaque de la seconde roue dentée ne comprend pas de dents.

11. Commutateur selon l'une quelconque des revendications 9 à 10, dans lequel la première partie et la seconde partie de la circonférence de la première plaque de la seconde roue dentée forment une circonférence complète de la première plaque de la seconde roue dentée.

12. Commutateur selon l'une quelconque des revendications 1 à 11, dans lequel le commutateur comprend :
- un troisième contact fixe ;
dans lequel, dans un état mis à la terre du commutateur, le contact mobile est dans une position qui connecte le second contact fixe au troisième contact fixe.

13. Appareillage de commutation moyenne tension ou haute tension comprenant au moins un commutateur selon l'une quelconque des revendications 1 à 12.
